# EUROPÄISCHE PATENTSCHRIFT

(11) **EP 1 495 667 B1**
(45) Veröffentlichungstag und Bekanntmachung des Hinweises auf die Patenterteilung: **17.11.2010**
(21) Anmeldenummer: 04015481.7
(22) Anmeldetag: 01.07.2004
(51) Int. Cl.: A01D 78/10, A01B 73/06

(54) **Heuwerbungsmaschine**
Haymaking machine
Machine de fenaison

(30) Priorität: 04.07.2003 DE 10330385
(43) Veröffentlichungstag der Anmeldung: 12.01.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Leifeling, Karl, Dipl.-Ing., 48477 Hörstel-Bevergern (DE); Spree, Christian, Dipl.-Ing., 49584 Fürstenau (DE)

(56) Entgegenhaltungen:
- EP-A- 1 108 352
- DE-A- 2 419 749
- DE-A- 4 008 648
- US-A- 3 475 890

## Beschreibung

Die Erfindung betrifft eine Heuwerbungsmaschine, insbesondere zum Zetten und Wenden, mit einem an zumindest zwei Maschinenbalken angeordneten und über Stützräder auf dem Boden abgestützten Arbeitskreiseln, wobei der um im wesentlichen vertikale Schwenkachsen in eine Transportstellung parallel zur Fahrtrichtung schwenkbare Seitenteile aufweisende Maschinenbalken durch horizontale Schwenkachsen in Einzeltragbalken unterteilt ist.

Eine Heuwerbungsmaschine zum Schwaden von landwirtschaftlichem Erntegut ist aus der EP 1 108 352 A1 bekannt geworden und umfasst vier um vertikale Achsen umlaufend angetriebene Kreiselrechen, die sich in der Arbeitsstellung auf Stützrädern gegenüber dem Erdboden abstützen. Über innere und äußere Ausleger sind die Kreiselrechen einem Maschinenrahmen der Heuwerbungsmaschine zugeordnet. Da die äußeren Ausleger in Abhängigkeit von der zu wählenden Arbeitsbreite in unterschiedliche Winkellagen in Bezug zur Fahrtrichtung verschwenkt werden können, ist es erforderlich, die Stützräder der äußeren Kreiselrechen entsprechend zur Fahrtrichtung auszurichten. In der Transportstellung der Kreiselrechen ist ein Ausrichten bzw. Lenken der Stützräder jedoch nicht erforderlich, da diese während der Transportfahrt überhaupt keine Bodenberührung haben.

Weiterhin bekannt sind Heuwerbungsmaschinen, die bei in Fahrtrichtung verschwenkten Teilen des Maschinenbalken ein oder mehrere gelenkte Räder haben, um somit beispielsweise die Transportfahrt zu vereinfachen. Sowohl in der Transport- als auch in der Arbeitsstellung ist es sinnvoll, dass die entlang der Maschinenbalken angeordneten Stützräder Bodenkontakt behalten, um eine größtmögliche Stabilität zu gewährleisten. Dieses führt dazu, dass horizontale Schwenkachsen, die in Arbeitsstellung beispielsweise in Fahrtrichtung zeigen und in Transportstellung quer zur Fahrtrichtung liegen, für eine vertikale Beweglichkeit der Maschinenbalken sorgen. Somit ist die Heuwerbungsmaschine in verschiedenen Betriebsstellungen an Unebenheiten des Untergrundes anpassbar. Nachteilig bei den vielfach ungelenkten Stützrädern in der Transportstellung ist, dass die rasche Straßenfahrt zu großen Instabilitäten der Heuwerbungsmaschine führen kann.

Eine Heuwerbungsmaschine mit diesen zuvor aufgeführten Merkmalen geht aus der DE 298 06 043 U1 hervor und weist eine Vielzahl von Arbeitskreiseln auf, welche sich sowohl während der Arbeitsfahrt als auch bei der Transportfahrt auf einem Stützrad auf dem Erdboden abstützen. Bei der Umstellung der Heuwerbungsmaschine von der Arbeits- in die Transportstellung, bei der die die Arbeitskreisel tragenden Rahmenseitenteile aus einer quer zur Fahrtrichtung sich erstreckenden Stellung in eine parallel zur Fahrtrichtung verlaufende Stellung überführt werden müssen, ist es erforderlich, ebenfalls die Stützräder unterhalb der Arbeitskreisel für die Straßenfahrt entsprechend auszurichten. Hierzu sieht die DE 298 06 043 U1 Stellglieder vor, welche eine Verstellbarkeit der Träger der Stützräder unterhalb der Arbeitskreisel bewirken. Ein Mangel einer solchen Anordnung ist in dem außerordentlich hohen Aufwand zu sehen.

Bekannt sind daher auch über eine Lenkstange verbundene, angelenkte Stützräder, bei denen sich in der Transportfahrt durch die vertikalen Schwingungen des Maschinenbalkens Verspannungen der Lenkstange und damit Radausschläge ergeben. Die aus diesen Radausschlägen folgenden Instabilitäten und Materialbelastungen sind ebenfalls von Nachteil für eine sichere und für den Fahrer angenehme Straßenfahrt. Außerdem stehen sie den Anforderungen an eine lange Lebensdauer der Maschine entgegen.

Der vorliegenden Erfindung liegt die Aufgabe zugrunde, die vorher genannten Probleme zu lösen und insbesondere eine Heuwerbungsmaschine zu schaffen, die eine sichere und ruhige Straßenfahrt ermöglicht.

Gelöst wird diese Aufgabe durch eine Heuwerbungsmaschine nach Anspruch 1. Die erfindungsgemäße Maschine zeichnet sich aus durch die an einem Maschinenbalken angebrachten und den jeweiligen Kreiselrechen zugeordneten Stützrädern, von denen mindestens zwei gemeinsam angelenkt sind, und wobei bei in Fahrtrichtung verschwenkten Maschinenbalken die dafür nötige Lenkvorrichtung zumindest zwei mit jeweils einer horizontalen Schwenkachse des Maschinenbalkens fluchtende Gelenke aufweist.

Durch die gemeinsame Lenkvorrichtung lässt sich bei konstruktiv niedrigem Aufwand eine exakte Übereinstimmung des Lenkausschlages der gelenkten Räder bewirken. So wird beispielsweise das in Fahrtrichtung zuerst liegende Rad bei einer Unebenheit des Bodens durch das mit diesem verbundenen weiteren Stützrad in der korrekten Spur gehalten. Da die Einzeltragbalken des Maschinenbalkens, die durch die Schwenkachsen miteinander verbunden sind, in unterschiedlichen Relativpositionen zu einander stehen können, weist die erfindungsgemäße Lenkvorrichtung mit den um horizontalen Schwenkachsen fluchtende Gelenke auf. Somit kann die Lenkvorrichtung, die beispielsweise eine von einem Einzeltragbalken zu einem weiteren Einzeltragbalken reichende Lenkstange aufweist, die relativen Vertikalbewegungen der Einzeltragbalken mitmachen. Die im Stand der Technik beschriebenen und bei einer festen Lenkstange für die angelenkten Stützräder auftretenden Probleme werden somit wirkungsvoll unterbunden.

Bei einer weiteren vorteilhaften Ausbildung gemäß der Erfindung sind die an den Tragbalken angeordneten und lenkbar ausgebildeten Stützräder während der Transportfahrt aktiv lenkbar. Dieses ist insbesondere bei den immer größer werdenden Arbeitsbreiten und der in Transportstellung größeren Längserstreckungen der Heuwerbungsmaschine für eine enge Kurvenfahrt von großem Vorteil. So können die aktiv gelenkten Stützräder beispielsweise die Einfahrt von einer Straße auf eine Wiese mit einem schmalen Durchgang deutlich erleichtern.

Die Heuwerbungsmaschine weist bevorzugt eine erhöhte Anzahl von Arbeitskreiseln mit jeweils geringerem Kreiseldurchmesser auf. Hierdurch sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der in etwa vertikalen Schwenkachsen der beiden seitlichen Maschinenbalken so gewählt ist, dass sich das Abstandsmaß A zwischen den inneren Arbeitskreiseln in der Arbeitsstellung bei der Überführung der seitlichen Maschinenbalken in die Transportstellung vergrößert.

Weitere Vorteile ergeben sich aus den übrigen Unteransprüchen sowie den schematischen Zeichnungen. In den Zeichnungen zeigt:
- Figur 1:: Eine Heuwerbungsmaschine nach dem Verschwenken in die Transportstellung, wobei die Stützräder noch quer zur Fahrtrichtung stehen.
- Figur 2:: Ein Ausschnitt aus Fig. 1, welcher die gemeinsamen Lenkvorrichtungen von jeweils zwei in Fahrtrichtung hintereinander liegenden Stützrädem an den Seitenteilen des Maschinenbalkens sowie die zugehörigen und in Arbeitsstellung befindlichen Stützräder zeigt.
- Figur 3:: Eine Abbildung nach Figur 2 mit in Transportstellung geschwenkten Stützrädern.
- Figur 4:: Eine Perspektivdarstellung eines Ausschnitts der in Transportstellung befindlichen Heuwerbungsmaschine mit in Fahrtrichtung weisenden Stützrädern.

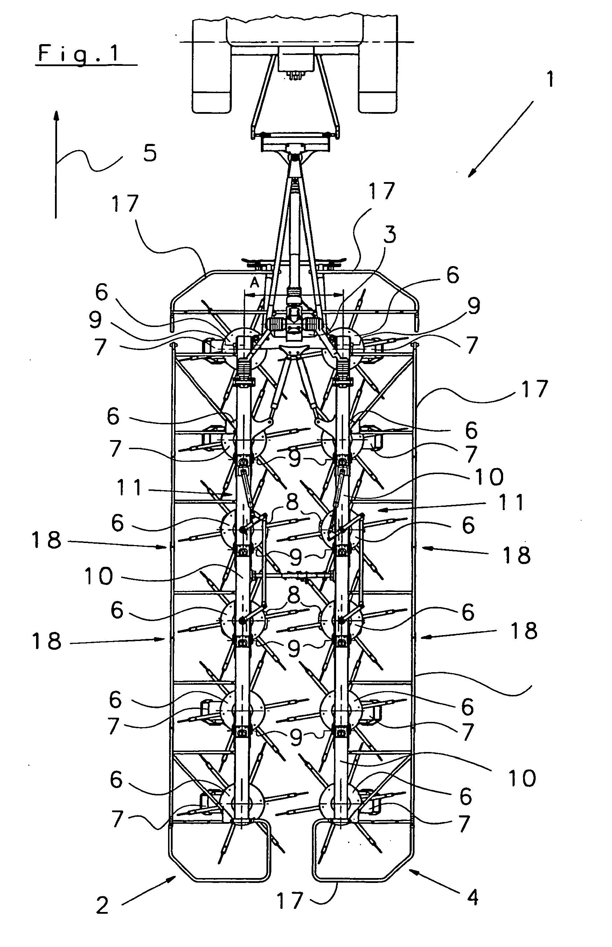

Dargestellt ist in Figur 1 ein Schleppfahrzeug, welches über eine nicht näher gekennzeichnete Aufhängungs- bzw. Ankupplungsvorrichtung die Heuwerbungsmaschine 1 zieht. Diese Heuwerbungsmaschine 1 befindet sich nahezu in einer Transportposition. Das in Fahrtrichtung linke Seitenteil 2 des Maschinenbalkens 3 sowie das in Fahrtrichtung rechte Seitenteil 4 des Maschinenbalkens 3 sind in eine parallel zur Fahrtrichtung 5 liegende Position verschwenkt. Die Arbeitskreisel 6 werden um nicht näher gekennzeichnete, in etwa vertikale Rotationsachsen gedreht. Ebenso wenig gekennzeichnet sind die Schwenkachsen der nachlaufend ungelenkten Stützräder 7. Die gelenkten Stützräder 8 sind in dieser Figur nur teilweise zu sehen, da sie sich zentral unterhalb der Arbeitskreisel 6 befinden. Die durch horizontale Schwenkachsen 9 voneinander getrennten Einzeltragbalken 10 sind nur teilweise beziffert.

Eine Lenkvorrichtung 11 pro Seitenteil steuert die gelenkten Stützräder 8 an, wobei die Stützräder 8 um eine Schwenkachse 12 verschwenkbar sind. Die in Figur 1 dargestellte Heuwerbungsmaschine 1 befindet sich noch nicht in ihrer vollständigen Transportstellung, da die gelenkten Stützräder 8 noch nicht in Fahrtrichtung eingeschwenkt wurden. Dieser Einschwenkvorgang kann vorzugsweise automatisch, nachdem die Seitenteile 2 und 4 des Maschinenbalkens 3 verschwenkt wurden, erfolgen, wodurch dem Betriebspersonal der Heuwerbungsmaschine die Arbeit erleichtert wird. In Figur 1 ist weiterhin die gemeinsame Lenkvorrichtung 11 der Stützräder 8 dargestellt.

Das Abstandsmaß A zwischen den Vertikalmittelachsen der beiden in Arbeitsstellung inneren Arbeitskreisel 6 ist in der Transportstellung (Fig. 1) vergrößert.

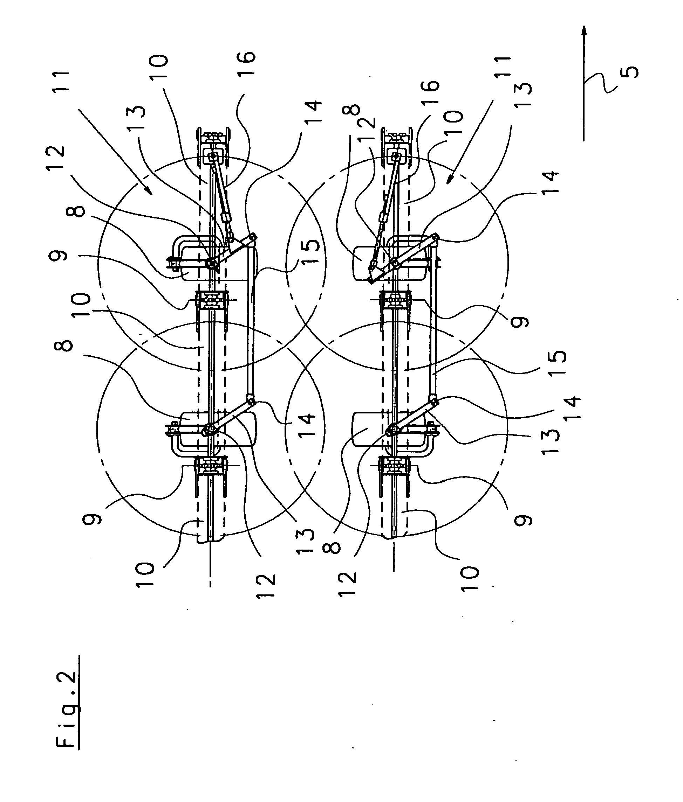

Die in Figur 2 näher erläuterte Lenkvorrichtung 11 weist bei dieser Ausführungsform der Erfindung an sich bekannte Hebelarme 13 auf, die an einem Ende Gelenke 14 besitzen, die auch Teil einer Lenkstange 15 sind. Aufgrund der unterschiedlichen Befestigungen der beiden in diesem Beispiel als Hydraulikzylinder ausgebildeten Stellglieder 16 an den Hebelarmen 13 und deren unterschiedliche Ausbildung werden die Stützräder 8 synchron im gleichen Drehsinn verschwenkt, während der eine Zylinder einfährt und der andere Zylinder ausfährt. Dieses ermöglicht die aktive Lenkbarkeit z. B. während der Kurvenfahrt, da beide Seitenteile 2, 4 synchron verschwenkt werden, oder zur Einstellung verschiedener Arbeitsstellungen zur Grenzstreubearbeitung, oder zur Kompensierung der Hangabtriebskräfte auf die Maschine bei einer Arbeitsfahrt quer zu einem Hang.

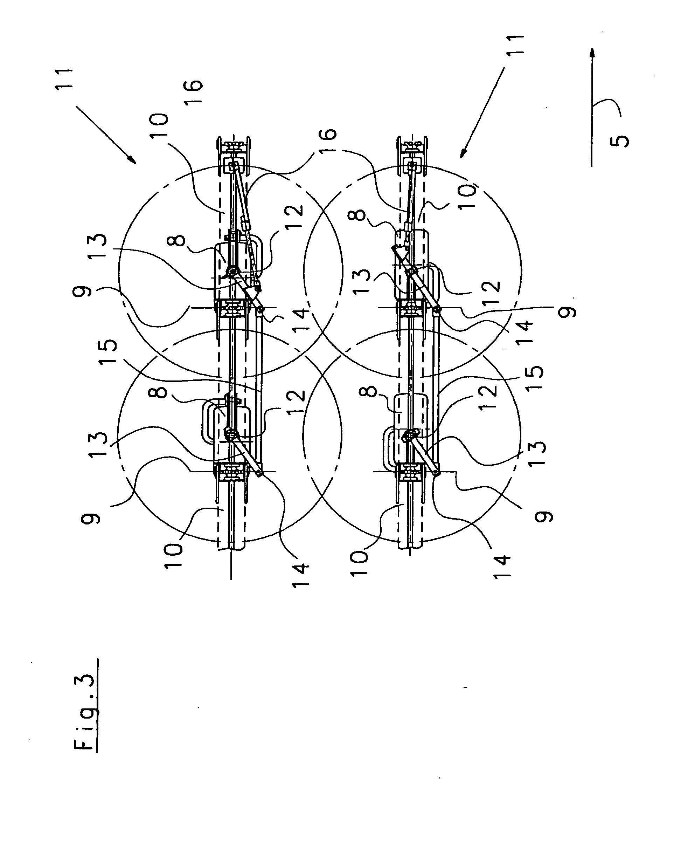

Figur 3 zeigt die Stützräder 8 nun in Transportstellung geschwenkt. Außerdem ist hier deutlich sichtbar, daß die Lenkstange 15, die parallel zum Einzeltragbalken 10 liegt, mit den an ihren Enden befindlichen Gelenken 14, die in diesem Fall Kugelgelenke sind, genau auf einer Linie mit den horizontalen Schwenkachsen 9 liegt. Somit können Relativbewegungen der Einzeltragbalken 10 bei der gelenkig mit einander verbundenen und über mehr als einen Einzeltragbalken 10 hinausgreifenden Lenkvorrichtung 11 von dieser mitgemacht werden. Damit werden kleinere Schwankungen des Lenkausschlages, die bei einer mit einer herkömmlichen Lenkstange verbundenen, gemeinsam angelenkten Stützrädern aufweisenden Heuwerbungsmaschine und einer Straßenfahrt von 40 - 50 km/h erhebliche Unruhe in die Heuwerbungsmaschine 1 bringen würden, verhindert.

Bei einer weiteren Ausbildung der Erfindung ist es möglich, daß die als Hydraulikzylinder ausgebildeten Stellglieder 16 einen noch längeren Kolbenweg zurücklegen. Somit ist aus Figur 3 und Figur 2 ersichtlich, daß ein Schwenkbereich der gelenkten Räder 8 von deutlich mehr als 90° möglich ist. Dieses bringt große Vorteile sowohl für eine nicht näher bezeichnete aktive Lenkung mit sich als auch für die verschiedenen Grenzstreueinstellungen.

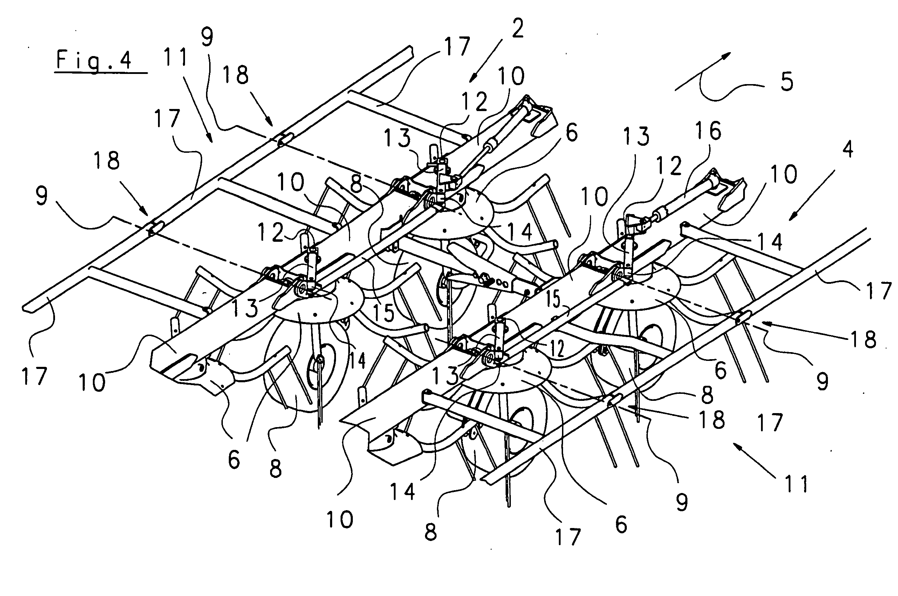

Eine weitere erfindungsgemäße Ausbildung einer Heuwerbungsmaschine 1 weist die an sich bekannten Rahmenteile 17 (Fig. 4), die ebenfalls nur teilweise beziffert sind, als Zugstangenelement ausgebildet auf. Dadurch werden insbesondere in Arbeitsstellung in Fahrtrichtung auftretende und auf die Seitenteile 2, 4 wirkende Kräfte aufgenommen und die Heuwerbungsmaschine 1 kann stabiler fahren. Für eine ruhige Transportfahrt liegen die die einzelnen Rahmenteile 17 verbindenden Gelenke 18 in einer Flucht mit den Kugelgelenken der Lenkvorrichtung 11 und den horizontalen Schwenkachsen 9.

Somit ist eine Heuwerbungsmaschine geschaffen, die bei hoher Fahrgeschwindigkeit mit Hilfe von mindestens zwei gelenkten Stützrädern pro linken und rechten Seitenteil 2,4 des Maschinenbalkens 3 und einer möglichen Vertikalbewegung mitmachenden Lenkvorrichtung 11 eine hohe Stabilität erreicht.

## Patentansprüche

1. Heuwerbungsmaschine, insbesondere zum Zetten und Wenden, mit an zumindest einem Maschinenbalken (3) angeordneten und über Stützräder (7, 8) auf dem Boden abgestützten Arbeitskreiseln (6), wobei der Maschinenbalken (3) um im wesentlichen vertikale Schwenkachsen in eine Transportstellung parallel zur Fahrtrichtung schwenkbare Seitenteile (2, 4) aufweist und zumindest zwei an einem Maschinenbalken (3) lenkbar angeordnete Stützräder (8) gemeinsam mit einer Lenkvorrichtung (11) verbunden sind, **dadurch gekennzeichnet,**
**dass** die schwenkbare Seitenteile (2,4) des Maschinenbalkens (3) durch horizontale Schwenkachsen (9) in Einzeltragbalken (10) unterteilt sind und die Lenkvorrichtung (11) zumindest zwei Gelenke (14) aufweist, die bei in transportstellung verschwenkten stützrädern mit jeweils einer horizontalen Schwenkachse (9) des Maschinenbalkens (3) fluchten.

2. Heuwerbungsmaschine nach Anspruch 1, **dadurch gekennzeichnet, daß** die Lenkvorrichtung (11) an den in etwa vertikalen Schwenkachsen (12) der gelenkten Räder befestigte Hebelarme aufweist, die jeweils endseitig eines der Gelenke (14) aufweisen, wobei die Gelenke (14) der zumindest zwei Hebelarme (13) mit einer Lenkstange (15) verbunden sind.

3. Heuwerbungsmaschine nach Anspruch 2, **dadurch gekennzeichnet, daß** die Hebelarme (13) mit der Lenkstange (15) durch Kugelgelenke miteinander verbunden sind.

4. Heuwerbungsmaschine nach einem der Ansprüche 2 oder 3, **dadurch gekennzeichnet, daß** ein Stellglied (16) zur Änderung des Lenkeinschlages der gelenkten Stützräder (8) an einem der Hebelarme (13) beweglich befestigt ist.

5. Heuwerbungsmaschine nach einem der Ansprüche 1 bis 4, **dadurch gekennzeichnet, daß** die gelenkten Stützräder (8) durch die Lenkvorrichtung (11) der Heuwerbungsmaschine (1) während der Fahrt aktiv steuerbar ausgeführt sind.

6. Heuwerbungsmaschine nach Anspruch 5, **dadurch gekennzeichnet, daß** die aktiv lenkbaren Stützräder (8) in der Transportstellung zur Geradeausfahrt blockierbar sind.

7. Heuwerbungsmaschine nach einem der Ansprüche 5 oder 6, **dadurch gekennzeichnet, daß** die aktiv lenkbaren Stützräder (8) in der Arbeits- und Betriebsstellung zur Geradeausfahrt blockierbar sind.

8. Heuwerbungsmaschine nach einem der Ansprüche 5 bis 7, **dadurch gekennzeichnet, daß** die aktiv lenkbaren Stützräder (8) nach der Überführung der Seitenteile (2, 4) in ihre Transportstellung durch zumindest eine Steuerungsvorrichtung automatisch in Fahrtrichtung verschwenkbar sind.

9. Heuwerbungsmaschine nach einem der Ansprüche 1 bis 8, **dadurch gekennzeichnet, daß** die lenkbaren Stützräder (8) bezüglich einer in etwa vertikalen Schwenkachse (12) innerhalb eines Lenkwinkelbereiches von mehr als 90° auf vorgebbare Lenkwinkel einstellbar sind.

10. Heuwerbungsmaschine nach einem der Ansprüche 1 bis 9 mit in Fahrtrichtung vor und seitlich des Maschinenbalkens an diesem angebrachten Rahmenteilen, welche als Schutzvorrichtung dienen, **dadurch gekennzeichnet, daß** in Transportstellung die als Zugstangenelement zur Aufnahme von in Arbeitsstellung auf den Maschinenbalken (3) in Fahrtrichtung wirkenden Kräften ausgebildeten Rahmenteile (17) mit den Gelenken (14) der Lenkvorrichtung (11) und den horizontalen Schwenkachsen (9) fluchtende Gelenke (18) aufweist.

## Claims

1. Haymaking machine, particularly for tedding and turning, having working rotors (6) which are arranged on at least one bar (3) of the machine and which are supported on the ground by means of supporting wheels (7, 8), the bar (3) of the machine having lateral members (2, 4) which can be pivoted about substantially vertical axes of pivot to a position for transport parallel to the direction of travel, and at least two supporting wheels (8) which are arranged to be steerable on a bar (3) of the machine being connected in unison to a steering arrangement (11), **characterised in that** the pivotable lateral members (2, 4) belonging to the bar (3) of the machine are divided into individual carrying bars (10) by horizontal axes of pivot (9) and the steering arrangement (11) has at least two joints (14) which, when the supporting wheels are pivoted to the position for transport, each line up with a horizontal axis of pivot (9) of the bar (3) of the machine.

2. Haymaking machine according to claim 1, **characterised in that** the steering arrangement (11) has lever arms which are fastened to the approximately vertical pivot shafts (12) of the steered wheels and which each have one of the joints (14) at an end, the joints (14) of the at least two lever arms (13) being connected to a steering tie rod (15).

3. Haymaking machine according to claim 2, **characterised in that** the lever arms (13) and the steering tie rod (15) are connected together by ball joints.

4. Haymaking machine according to either of claims 2 and 3, **characterised in that** a positioner (16) for changing the steering angle of the steered supporting wheels (8) is movably fastened to one of the lever arms (13).

5. Haymaking machine according to one of claims 1 to 4, **characterised in that** the steered supporting wheels (8) are designed to be actively steerable during travel by the steering arrangement (11) of the haymaking machine (1).

6. Haymaking machine according to claim 5, **characterised in that** the actively steerable supporting wheels (8) can be locked for straight-ahead travel in the position for transport.

7. Haymaking machine according to either of claims 5 and 6, **characterised in that** the actively steerable supporting wheels (8) can be locked for straight-ahead travel in the working and operating position.

8. Haymaking machine according to one of claims 5 to 7, **characterised in that** after the lateral members (2, 4) have been transferred to their position for transport the actively steerable supporting wheels (8) can be pivoted automatically to the direction of travel by at least one control arrangement.

9. Haymaking machine according to one of claims 1 to 8, **characterised in that**, in relation to an approximately vertical shaft or axis of pivot (12), the steerable supporting wheels (8) can be set to presettable steering angles within a range of steering angles covering more than 90°.

10. Haymaking machine according to one of claims 1 to 9 having frame members which are mounted on the bar of the machine ahead thereof in the direction of travel and laterally thereof and which act as a protective arrangement, **characterised in that**, in the position for transport, the frame members (17), which are designed to form traction-bar members to withstand forces which act on the bar (3) of the machine in the direction of travel in the operating position, have joints (18) which line up with the joints (14) of the steering arrangement (11) and with the horizontal axes of pivot (9).

## Revendications

1. Machine de fenaison, notamment pour étaler et retourner, comportant des rotors (6) installés sur au moins une poutre (3) de la machine et s'appuyant sur le sol par des roues de sustentation (7, 8),
- la poutre (3) de la machine ayant des parties latérales (2, 4) pivotant parallèlement à la direction de déplacement autour d'axes de pivotement pratiquement verticaux dans une position de transport et au moins deux roues de sustentation (8) guidées de la poutre (3) de la machine, sont reliées en commun à un dispositif de guidage (11), machine **caractérisée en ce que**
- les parties latérales (2, 4) pivotantes de la poutre (3) de la machine, sont subdivisées en éléments de poutre (10) par des axes de pivotement (9), horizontaux, et
- le dispositif de guidage (11) comporte au moins deux articulations (14) qui, lorsque les roues de sustentation sont basculées en position de transport, sont alignées respectivement sur un axe de pivotement horizontal (9) de la poutre (3) de la machine.

2. Machine de fenaison selon la revendication 1,
**caractérisée en ce que**
- le dispositif de guidage (11) comporte des bras de levier fixés sur les roues articulées sensiblement au niveau des axes de pivotement verticaux (12),
- ces bras de levier étant respectivement reliés d'un côté à l'une des articulations (14),
- les articulations (14) d'au moins deux bras de levier (13) sont reliées par une barre de guidage (15).

3. Machine de fenaison selon la revendication 2,
**caractérisée en ce que**
les bras de levier (13) sont reliés à la barre de guidage (15) par des articulations à rotules.

4. Machine de fenaison selon l'une des revendications 2 ou 3,
**caractérisée en ce que**
un organe d'actionnement (16) est fixé de manière mobile à l'un des bras de levier (13) pour modifier le braquage des roues de sustentation (8), articulées.

5. Machine de fenaison selon l'une des revendications 1 à 4,
**caractérisée en ce que**
les roues de sustentation (8), articulées, sont réalisées de façon à être commandées de manière active pendant le déplacement par le dispositif de guidage (11) de la machine de fenaison (1).

6. Machine de fenaison selon la revendication 5,
**caractérisée en ce que**
les roues de sustentation (8) guidées de manière active, se bloquent en position de transport pour le déplacement en ligne droite.

7. Machine de fenaison selon l'une des revendications 5 ou 6,
**caractérisée en ce que**
les roues de sustentation (8) guidées de manière active, sont bloquées en position de travail et en position de fonctionnement pour un déplacement en ligne droite.

8. Machine de fenaison selon l'une des revendications 5 à 7,
**caractérisée en ce que**
les roues de sustentation (8) guidées de manière active, après passage des parties latérales (2, 4) en position de transport, peuvent être pivotées automatiquement dans la direction de déplacement par au moins un dispositif de commande.

9. Machine de fenaison selon l'une des revendications 1 à 8,
**caractérisée en ce que**
les roues de sustentation (8), guidées, peuvent être réglées par rapport à un axe de pivotement (12) sensiblement vertical dans une plage angulaire de braquage de plus de 90° suivant un angle de braquage prédéfini.

10. Machine de fenaison selon l'une des revendications 1 à 9, comportant des parties de châssis installées dans la direction de déplacement devant et latéralement sur la poutre de la machine, ces parties de châssis servant de dispositif de protection,
**caractérisée en ce qu'**
en position de transport, les parties de châssis (17) réalisées comme éléments de barre de traction pour recevoir les efforts agissant dans la direction de déplacement sur la poutre (3) de la machine en position de travail, comportent des articulations (14) alignées sur le dispositif de guidage (11) et l'axe de basculement horizontal (9) des articulations alignées (18).
